# EUROPEAN PATENT APPLICATION

(11) **EP 4 712 449 A1**
(43) Date of publication of application: **18.03.2026**
(21) Application number: 24814079.0
(22) Date of filing: 30.04.2024
(51) Int. Cl.: H04L 67/51

(54) **NETWORK MANAGEMENT SERVICE INTENTION MANAGEMENT METHOD, DEVICE AND SYSTEM**

(30) Priority: 30.05.2023 CN 202310627382
(71) Applicant: Huawei Technologies Co., Ltd., Shenzhen, Guangdong 518129 (CN)
(72) Inventor: FENG, Xiaohan, Shenzhen, Guangdong 518129 (CN); LI, Yexing, Shenzhen, Guangdong 518129 (CN); YU, Yijun, Shenzhen, Guangdong 518129 (CN); RAO, Baoquan, Shenzhen, Guangdong 518129 (CN)
(74) Representative: Gill Jennings & Every LLP
(86) International application number: PCT/CN2024/090742
(87) International publication number: WO 2024/244874

(57) **Abstract**

This application provides a network management intent management method. The method includes: sending, to N network management service producer entities in a one-to-one manner, N network management sub-intents obtained by decomposing a network management intent; respectively receiving N execution results of the N network management sub-intents, and obtaining an execution result of the network management intent based on the N execution results, where the N execution results include an execution result indicating unfulfillment; and sending, based on the execution result of the network management intent, management indication information to a network management service producer entity that fails to fulfill a target, where the management indication information indicates whether to replace a network management action group for fulfilling a target of a corresponding network management sub-intent. Therefore, whether the producer entity that fails to fulfill the target is to replace the management action group is determined based on the execution result of the network management intent, instead of replacing, based on that the target of the network management sub-intent fails to be fulfilled, the management action group by the producer entity that fails to fulfill the target. This improves a manner of managing the network management intent.

## Description

This application claims priority to Chinese Patent Application No. 202310627382.X, filed with the China National Intellectual Property Administration on May 30, 2023 and entitled "NETWORK MANAGEMENT SERVICE INTENT MANAGEMENT METHOD AND APPARATUS, AND SYSTEM", which is incorporated herein by reference in its entirety.

### TECHNICAL FIELD

This application relates to the field of communication technologies, and more specifically, to a network management service intent management method and apparatus, and a system.

### BACKGROUND

A network management service consumer entity may impose a requirement for a network management service by using a network management intent. With development of network resource management, the network management service consumer entity may decompose the network management intent into a plurality of network management sub-intents, to trigger a plurality of network management service producer entities to respectively execute the network management sub-intents. Provided that a target of one network management sub-intent fails to be fulfilled, a corresponding network management service producer entity needs to replace a management action group for fulfilling the target of the network management sub-intent, so that an execution result of the network management intent is fulfillment. However, this execution result may exceed fulfillment of a target of the network management intent, resulting in an unnecessary waste of resources.

Therefore, how to improve a manner of managing a network management intent is an urgent technical problem to be resolved.

### SUMMARY

This application provides a network management intent management method, an apparatus, and a system, to improve a manner of managing a network management intent.

According to a first aspect, a network management intent execution method is provided. The method may be performed by a network management service consumer entity or a chip in the network management service consumer entity. The method includes: sending, to N network management service producer entities in a one-to-one manner, N network management sub-intents obtained by decomposing a network management intent; receiving N execution results corresponding to the N network management sub-intents, where the N execution results are correspondingly from the N network management entities, and obtaining an execution result of the network management intent based on the N execution results, where the N execution results include an execution result indicating unfulfillment; and sending, based on the execution result of the network management intent, management indication information to a network management service producer entity that fails to fulfill a target, where the network management service producer entity that fails to fulfill the target is a network management service producer entity in the N network management service producer entities that fails to fulfill a target of a corresponding network management sub-intent, and the management indication information indicates whether the network management service producer entity that fails to fulfill the target is to replace a network management action group for fulfilling the target of the corresponding network management sub-intent.

According to this technical solution, the consumer entity can determine, based on execution statuses of different network management sub-intents, whether the producer entity that fails to fulfill the target is to replace the management action group. The producer entity that fails to fulfill the target determines, based on an indication of the consumer entity, whether to replace the management action group, instead of replacing the management action group based on that the target of the network management sub-intent fails to be fulfilled. This can avoid an unnecessary action of replacing a management action group, and improve a manner of managing the network management intent.

With reference to the first aspect, in some implementations of the first aspect, the N execution results respectively include performance indicator values of managed entities of the corresponding network management sub-intents. Obtaining the execution result of the network management intent based on the N execution results includes: determining, based on the performance indicator values of the managed entities of the N network management sub-intents, whether the execution result of the network management intent is fulfillment or unfulfillment.

According to this technical solution, the consumer entity may determine, by using the performance indicator values returned by a plurality of producer entities, whether a target of the network management intent is fulfilled, instead of determining, based on that a target of each network management sub-intent is fulfilled, that the target of the network management intent is fulfilled. In this way, whether the target of the network management intent is fulfilled is determined more appropriate, and a manner of managing the network management intent is further improved.

With reference to the first aspect, in some implementations of the first aspect, an execution result that is of the network management sub-intent and that is sent by the network management producer entity that fails to fulfill the target further includes action group exhaustion indication information, and the action group exhaustion indication information indicates whether the network management producer entity that fails to fulfill the target has a network management action group that can be used for replacement.

According to this technical solution, the management service producer entity that fails to fulfill the target may further return the action group exhaustion indication information, so that the consumer entity can know whether the management service producer entity that fails to fulfill the target has a capability of replacing the management action group, to avoid unnecessary signaling exchange caused by the consumer entity indicating the producer entity to replace a management action group when there is no management action group used for replacement.

With reference to the first aspect, in some implementations of the first aspect, before obtaining the execution result of the network management intent based on the N execution results, the method further includes: respectively sending action group freezing indication information to the N network management service producer entities, where the action group freezing indication information indicates the N network management service producer entities not to replace network management action groups based on the execution results of the corresponding network management sub-intents.

According to this technical solution, before receiving the management indication information from the consumer entity, the producer entity may freeze replacement of the management action group, to reduce an unnecessary replacement action and improve a manner of managing the network management intent.

With reference to the first aspect, in some implementations of the first aspect, the method further includes: adjusting, based on the N execution results, the target of the network management sub-intent corresponding to the network management service producer entity that fails to fulfill the target, where the management indication information further indicates an adjusted target of the network management sub-intent corresponding to the network management service producer entity that fails to fulfill the target.

According to this technical solution, the consumer entity may further adjust the targets of the network management sub-intent based on execution results of different network management sub-intents, so that a manner of executing the network management intent is more appropriate.

With reference to the first aspect, in some implementations of the first aspect, before obtaining the execution result of the network management intent based on the N execution results, the method further includes: sending, to the N network management service producer entities respectively, trigger conditions for returning the execution results of the network management sub-intents, where the trigger condition is that a target of a corresponding network management sub-intent fails to be fulfilled within detection duration.

According to this technical solution, the consumer entity may indicate the producer entity to return the execution result when the target of the network management sub-intent fails to be fulfilled within the detection duration, so that the consumer entity can learn a fulfillment status of the network management sub-intent in a timely manner and make a decision in a timely manner, to improve management performance of the network management intent.

With reference to the first aspect, in some implementations of the first aspect, receiving the execution results of the corresponding network management sub-intents respectively from the N network management service producer entities includes: receiving the execution result of the corresponding network management sub-intent from the network management service producer entity that fails to fulfill the target; sending fulfillment status query information to another network management service producer entity other than the network management service producer entity that fails to fulfill the target in the N network management service producer entities, where the fulfillment status query information is for requesting to return an execution result of a corresponding network management sub-intent; and receiving the execution result of the corresponding network management sub-intent from the another network management service producer entity.

According to this technical solution, the consumer entity may send, based on the result returned by the producer entity that fails to fulfill the target or if a target of a network management sub-intent fails to be fulfilled, execution result query information to another producer entity that does not return an execution result. In this case, the another producer entity may return an execution result of a corresponding network management sub-intent to the consumer entity in a timely manner.

With reference to the first aspect, in some implementations of the first aspect, the method further includes: when the execution result of the network management intent is fulfillment, determining that the network management service producer entity that fails to fulfill the target is not to replace the network management action group, where the management indication information indicates the network management service producer entity that fails to fulfill the target not to replace the network management action group; or when the execution result of the network management intent is unfulfillment, determining that the network management service producer entity that fails to fulfill the target is to replace the network management action group, where the management indication information indicates the network management service producer entity that fails to fulfill the target to replace the network management action group; or when the execution result of the network management intent is unfulfillment and the network management producer entity that fails to fulfill the target has a network management action group that can be used for replacement, determining that the network management service producer entity that fails to fulfill the target is to replace the network management action group, where the management indication information indicates the network management service producer entity that fails to fulfill the target to replace the network management action group.

According to this technical solution, the consumer entity can determine, based on fulfillment statuses of different network management sub-intents, whether the producer entity that fails to fulfill the target is to replace the management action group, instead of determining, based on that the target of each network management sub-intent is fulfilled, that the target of the network management intent is fulfilled. In this way, determining whether the target of the network management intent is fulfilled is determined more appropriately, and management performance of the network management intent can be improved.

With reference to the first aspect, in some implementations of the first aspect, the N network management service producer entities are respectively N different equipment management systems, or the N network management producer entities are respectively N different network elements.

With reference to the first aspect, in some implementations of the first aspect, the network management intent is an end-to-end intent, and the N network management sub-intents are N different management domain intents obtained by decomposing the end-to-end intent.

According to a second aspect, a network management intent management method is provided. The method may be performed by a network management service producer entity or a chip in the network management service producer entity. The method includes: receiving a network management sub-intent obtained by decomposing a network management intent; sending an execution result of the network management sub-intent, where the execution result of the network management sub-intent indicates that a target of the network management sub-intent fails to be fulfilled; and receiving management indication information, where the management indication information indicates whether to replace a network management action group for fulfilling the target of the network management sub-intent, and the management indication information is determined based on an execution result of the network management intent.

For beneficial technical effects of the implementations of the second aspect, refer to descriptions of related implementations of the first aspect. Details are not described again.

With reference to the second aspect, in some implementations of the second aspect, the execution result of the network management sub-intent includes a performance indicator value of a managed entity of the network management sub-intent, and the performance indicator value is for determining that the execution result of the network management intent is fulfillment or unfulfillment.

With reference to the second aspect, in some implementations of the second aspect, the execution result of the network management sub-intent further includes action group exhaustion indication information, and the action group exhaustion indication information indicates whether there is a network management action group that can be used for replacement.

With reference to the second aspect, in some implementations of the second aspect, before sending the execution result of the network management sub-intent, the method further includes: receiving action group freezing indication information, where the action group freezing indication information indicates not to replace the network management action group based on the execution result of the network management sub-intent.

With reference to the second aspect, in some implementations of the second aspect, the management indication information further indicates an adjusted target of the network management sub-intent.

With reference to the second aspect, in some implementations of the second aspect, before sending the execution result of the network management sub-intent, the method further includes: receiving a trigger condition for returning the execution result of the network management sub-intent, where the trigger condition is that the target of the network management sub-intent fails to be fulfilled within detection duration; and sending the execution result of the network management sub-intent includes: sending the execution result of the network management sub-intent in response to that the trigger condition is satisfied.

With reference to the second aspect, in some implementations of the second aspect, the network management intent is an end-to-end intent, and the network management sub-intent is a management domain intent obtained by decomposing the end-to-end intent.

With reference to the second aspect, in some implementations of the second aspect, the method further includes: determining, based on the management indication information, whether to replace the network management action group for fulfilling the target of the network management sub-intent.

According to a third aspect, a network management intent execution method is provided. The method includes: sending, to N network management service producer entities in a one-to-one manner, N network management sub-intents obtained by decomposing a network management intent, and respectively receiving, by the N network management service producer entities, the corresponding network management sub-intents; respectively sending, by the N network management service producer entities, execution results of the corresponding network management sub-intents, receiving N execution results corresponding to the N network management sub-intents, where the N execution results are correspondingly from the N network management entities, and obtaining an execution result of the network management intent based on the N execution results, where the N execution results include an execution result indicating unfulfillment; and sending, based on the execution result of the network management intent, management indication information to a network management service producer entity that fails to fulfill a target, and receiving, by the network management service producer entity that fails to fulfill the target, the management indication information, where the network management service producer entity that fails to fulfill the target is a network management service producer entity in the N network management service producer entities that fails to fulfill a target of a corresponding network management sub-intent, and the management indication information indicates whether the network management service producer entity that fails to fulfill the target is to replace a network management action group for fulfilling the target of the corresponding network management sub-intent.

For beneficial technical effects of the implementations of the third aspect, refer to descriptions of related implementations of the first aspect. Details are not described again.

With reference to the third aspect, in some implementations of the third aspect, the N execution results respectively include performance indicator values of managed entities of the corresponding network management sub-intents. Obtaining the execution result of the network management intent based on the N execution results includes: determining, based on the performance indicator values of the managed entities of the N network management sub-intents, whether the execution result of the network management intent is fulfillment or unfulfillment.

With reference to the third aspect, in some implementations of the third aspect, an execution result that is of the network management sub-intent and that is sent by the network management producer entity that fails to fulfill the target further includes action group exhaustion indication information, and the action group exhaustion indication information indicates whether the network management producer entity that fails to fulfill the target has a network management action group that can be used for replacement.

With reference to the third aspect, in some implementations of the third aspect, before obtaining the execution result of the network management intent based on the N execution results, the method further includes: respectively sending action group freezing indication information to the N network management service producer entities, and separately receiving, by the N network management service producer entities, the action group freezing indication information, where the action group freezing indication information indicates the N network management service producer entities not to replace network management action groups based on the execution results of the corresponding network management sub-intents.

With reference to the third aspect, in some implementations of the third aspect, the method further includes: adjusting, based on the N execution results, the target of the network management sub-intent corresponding to the network management service producer entity that fails to fulfill the target, where the management indication information further indicates an adjusted target of the network management sub-intent corresponding to the network management service producer entity that fails to fulfill the target.

With reference to the third aspect, in some implementations of the third aspect, before obtaining the execution result of the network management intent based on the N execution results, the method further includes: sending, to the N network management service producer entities respectively, trigger conditions for returning the execution results of the network management sub-intents, and respectively receiving, by the N network management service producer entities, the trigger conditions for returning the execution results of the network management sub-intents, where the trigger condition is that a target of a corresponding network management sub-intent fails to be fulfilled within detection duration.

With reference to the third aspect, in some implementations of the third aspect, receiving the execution results of the corresponding network management sub-intents respectively from the N network management service producer entities includes: receiving the execution result of the corresponding network management sub-intent from the network management service producer entity that fails to fulfill the target, the execution result of the network management sub-intent corresponding to the network management service producer entity that fails to fulfill the target; sending fulfillment status query information to another network management service producer entity other than the network management service producer entity that fails to fulfill the target in the N network management service producer entities, and receiving, by the another network management service producer entity, the fulfillment status query information, where the fulfillment status query information is for requesting to return an execution result of a corresponding network management sub-intent; and sending, by the another network management service producer entity, the execution result of the corresponding network management sub-intent, and receiving the execution result of the corresponding network management sub-intent from the another network management service producer entity.

With reference to the third aspect, in some implementations of the third aspect, the method further includes: when the execution result of the network management intent is fulfillment, determining that the network management service producer entity that fails to fulfill the target is not to replace the network management action group, where the management indication information indicates the network management service producer entity that fails to fulfill the target not to replace the network management action group; or when the execution result of the network management intent is unfulfillment, determining that the network management service producer entity that fails to fulfill the target is to replace the network management action group, where the management indication information indicates the network management service producer entity that fails to fulfill the target to replace the network management action group; or when the execution result of the network management intent is unfulfillment and the network management producer entity that fails to fulfill the target has a network management action group that can be used for replacement, determining that the network management service producer entity that fails to fulfill the target is to replace the network management action group, where the management indication information indicates the network management service producer entity that fails to fulfill the target to replace the network management action group.

With reference to the third aspect, in some implementations of the third aspect, the N network management service producer entities are respectively N different equipment management systems, or the N network management producer entities are respectively N different network elements.

With reference to the third aspect, in some implementations of the third aspect, the network management intent is an end-to-end intent, and the N network management sub-intents are N different management domain intents obtained by decomposing the end-to-end intent.

With reference to the third aspect, in some implementations of the third aspect, the method further includes: The network management producer entity that fails to fulfill the target determines, based on the management indication information, whether to replace the network management action group for fulfilling the target of the network management sub-intent.

According to a fourth aspect, a communication apparatus is provided. The communication apparatus includes a transceiver unit and a processing unit. The transceiver unit is configured to send, to N network management service producer entities in a one-to-one manner, N network management sub-intents obtained by decomposing a network management intent. The transceiver unit is configured to: receive N execution results corresponding to the N network management sub-intents, where the N execution results are correspondingly from the N network management entities, and obtain an execution result of the network management intent based on the N execution results, where the N execution results include an execution result indicating unfulfillment. The processing unit is configured to send, based on the execution result of the network management intent, management indication information to a network management service producer entity that fails to fulfill a target, where the network management service producer entity that fails to fulfill the target is a network management service producer entity in the N network management service producer entities that fails to fulfill a target of a corresponding network management sub-intent, and the management indication information indicates whether the network management service producer entity that fails to fulfill the target is to replace a network management action group for fulfilling the target of the corresponding network management sub-intent.

For implementations of the fourth aspect and beneficial technical effects of the implementations, refer to descriptions of related implementations of the first aspect. Details are not described again.

According to a fifth aspect, a communication apparatus is provided. The communication apparatus includes a transceiver unit and a processing unit. The transceiver unit is configured to receive a network management sub-intent obtained by decomposing a network management intent. The transceiver unit is configured to send an execution result of the network management sub-intent, where the execution result of the network management sub-intent indicates that a target of the network management sub-intent fails to be fulfilled. The transceiver unit is configured to receive management indication information, where the management indication information indicates whether to replace a network management action group for fulfilling the target of the network management sub-intent, and the management indication information is determined based on an execution result of the network management intent.

For implementations of the fifth aspect and beneficial technical effects of the implementations, refer to descriptions of related implementations of the first aspect and the second aspect. Details are not described again.

According to a sixth aspect, a communication apparatus is provided. The communication apparatus has a function of implementing any one of the first aspect or the possible implementations of the first aspect, any one of the second aspect or the possible implementations of the second aspect, or any one of the third aspect or the possible implementations of the third aspect. The function may be implemented by hardware, or may be implemented by hardware executing corresponding software. The hardware or the software includes one or more units corresponding to the foregoing function.

According to a seventh aspect, a communication apparatus is provided, and includes a processor and a memory. Optionally, the communication apparatus may further include a transceiver. The memory is configured to store a computer program. The processor is configured to: invoke and run the computer program stored in the memory, and control the transceiver to receive and send a signal, to enable the communication apparatus to perform the method according to any one of the first aspect or the possible implementations of the first aspect.

For example, the communication apparatus is a network management service producer entity.

According to an eighth aspect, a communication apparatus is provided, and includes a processor and a memory. Optionally, the communication apparatus may further include a transceiver. The memory is configured to store a computer program. The processor is configured to: invoke and run the computer program stored in the memory, and control the transceiver to receive and send a signal, to enable the communication apparatus to perform the method according to any one of the second aspect or the possible implementations of the second aspect.

For example, the communication apparatus is a network management service consumer entity.

According to a ninth aspect, a communication apparatus is provided, and includes a processor and a communication interface. The communication interface is configured to: receive data and/or information, and transmit the received data and/or information to the processor. The processor processes the data and/or information. In addition, the communication interface is further configured to output data and/or information that are/is obtained through processing by the processor, to perform the method according to any one of the first aspect or the possible implementations of the first aspect. The communication apparatus may be a chip used in a network management service producer network element.

According to a tenth aspect, a communication apparatus is provided, and includes processor and a communication interface. The communication interface is configured to: receive data and/or information, and transmit the received data and/or information to the processor. The processor processes the data and/or information. In addition, the communication interface is further configured to output data and/or information that are/is obtained through processing by the processor, to perform the method according to any one of the second aspect or the possible implementations of the second aspect. The communication apparatus may be a chip used in a network management service consumer network element.

According to an eleventh aspect, a computer-readable storage medium is provided. The computer-readable storage medium stores computer instructions. When the computer instructions are run on a computer, the method according to any one of the first aspect or the possible implementations of the first aspect is performed.

According to a twelfth aspect, a computer-readable storage medium is provided. The computer-readable storage medium stores computer instructions. When the computer instructions are run on a computer, the method according to any one of the second aspect or the possible implementations of the second aspect is performed.

According to a thirteenth aspect, a computer program product is provided. The computer program product includes computer program code. When the computer program code is run on a computer, the method according to any one of the first aspect or the possible implementations of the first aspect is performed.

According to a fourteenth aspect, a computer program product is provided. The computer program product includes computer program code. When the computer program code is run on a computer, the method according to any one of the second aspect or the possible implementations of the second aspect is performed.

According to a fifteenth aspect, a wireless communication system is provided, and includes the communication apparatus according to the fourth aspect and/or the communication apparatus according to the fifth aspect.

According to a sixteenth aspect, a wireless communication system is provided, and includes the communication apparatus according to any one or more of the fourth aspect to the fifteenth aspect, or the communication apparatus according to any possible implementation of any one of the aspects.

### BRIEF DESCRIPTION OF DRAWINGS

FIG. 1 is a diagram of a structure of an intent IOC;
FIG. 2 is a diagram of a structure of a communication system to which an embodiment of this application is applicable;
FIG. 3 is a schematic flowchart of a network management intent management method according to an embodiment of this application;
FIG. 4 is another schematic flowchart of a network management intent management method according to an embodiment of this application; and
FIG. 5 and FIG. 7 are diagrams of possible communication apparatuses according to embodiments of this application.

### DESCRIPTION OF EMBODIMENTS

The following describes technical solutions of this application with reference to the accompanying drawings.

The technical solutions of this application may be applied to various network function virtualization (network function virtualization, NFV) systems. In the systems, current service technical solutions, network construction schemes, and network operations and maintenance methods of an operator may be described as modes and policies in a standard formal language, and the technical solutions and the construction schemes are implemented based on the modes and the policies. For example, the technical solutions in this application may be applied to one or more of the following systems: a wireless intent driven network (wireless intent driven network, wIDN) system, an experiential networked intelligence (experiential networked intelligence, ENI) system, an intent driven management service (intent driven management service, IDMS) system, an open network automation platform (open network automation platform, ONAP) system, or the like.

For clarity, the following explains some terms in embodiments of this application.

For clarity, the following explains some terms in embodiments of this application.

### 1. Network management, network management service, network management service producer entity, and network management service consumer entity

### 1.1 Network management

The network management is to manage a network resource, including but not limited to monitoring, controlling, and recording performance and usage of the network resource, and delivering a management action group to the network resource (for example, a device in a network) based on a detected network status, to enable the network to run effectively. For example, the network management may be to monitor, test, configure, analyze, evaluate, and control the network resource. The network management may alternatively be that when a fault occurs in the network, the fault can be reported and processed in time, a network system can be coordinated and maintained to run efficiently, and the like. The network resource is an object to which the network management is applied, and may also be referred to as a network object or a managed entity. For example, the network resource may be a base station device, a router, a switch, or a core network device. This is not particularly limited in embodiments of this application. For ease of description, the managed entity is used as an example for description in embodiments of this application, but may be replaced with another object to which the network management is applied.

### 1.2 Network management service

The network management service is a service that provides a network management function. A producer entity of the service usually provides the network management function for a consumer entity of the service through a network interface (for example, a service based interface, service based interface).

### 1.3 Network management service producer entity

An entity that provides a network management service is referred to as the network management service producer entity. For example, a capability or a function of the network management service producer entity may be deployed on a network element, and the network element is referred to as a network management service producer network element. Alternatively, the capability or the function of the network management service producer entity may be deployed on another device. This is not limited in embodiments of this application. For ease of description, the network management service producer entity is used as an example for description in embodiments of this application, but may be replaced with another device on which the capability or the function of the network management service producer entity is deployed.

### 1.4 Network management service consumer entity

An entity that invokes network management is referred to as the network management service consumer entity. For example, a capability or a function of the network management service consumer entity may be deployed on a network element, and the network element is referred to as a network management service consumer network element. Alternatively, the capability or the function of the network management service consumer entity may be deployed on another device. This is not limited in embodiments of this application. For ease of description, the network management service consumer entity is used as an example for description in embodiments of this application, but may be replaced with another device on which the capability or the function of the network management service consumer entity is deployed.

### 2. Network management intent (intent for short)

The network management intent is a requirement of a network management service consumer entity for a network management service, and may also be referred to as a network management service requirement. A name is not limited in embodiments of this application. For example, the network management intent may be an intent such as an optical dedicated line service intent or an energy saving intent, for example, an intent (intent) defined in the 3rd generation partnership project (3rd generation partnership project, 3GPP) standard specification 28.312.

In an intent-based interaction scenario in this application, two roles are mainly included: a network management provider entity and a network management service consumer entity. The network management service provider entity may also be referred to as a network management service provider, an intent provider (intent provider), an intent handler (intent handler), or the like. The network management service consumer entity may also be referred to as a network management service consumer, an intent consumer (intent consumer), an intent owner (intent owner), or the like.

The network management service consumer entity may be a network management service invoker, may perform operations such as creating, modifying, deleting, and querying for a network management intent expression, may be configured in a network management system (network management system, NMS), an element management system (element management system, EMS), or a network device (network equipment, NE), and may be a management function, a management functional entity, a management entity, a network device, a network element, or the like. This is not limited in this application.

The intent may be applied to a network system, to fulfill an expected target of a specified performance indicator of a network device in a specific range. The intent may express an expectation for the network system by using a formal specification and description information. The formal specification may be intent-specific syntax or semantics, and the description information may be for describing a requirement, a target, and a constraint of the intent.

The intent may include at least one intent expectation. Each intent expectation may represent a performance requirement of a network management service consumer entity for a specific network object. An intent expectation may include at least one expectation target and an expectation object. Each expectation target may represent a performance requirement of a network management service consumer entity for a specific attribute of the expectation object. For example, the intent expectation may include two expectation targets, where one expectation target is that an average downlink throughput rate is greater than 5 Mbit/s, and the other expectation target is that an end-to-end delay is less than 10 milliseconds. If the average downlink throughput rate of the expectation object is greater than 5 Mbit/s, the expectation target for the downlink throughput rate is satisfied. If the end-to-end delay of the expectation object is less than 10 milliseconds, the expectation target for the delay is satisfied. If the two expectation targets of the intent expectation are satisfied, the intent expectation is fulfilled.

The intent may further include an intent context. The intent context may represent a constraint or condition of the network management service consumer entity for the intent. For example, the network management service consumer entity may restrict action duration of the intent by using the intent context.

The intent may further include an expectation context. The expectation context may represent a constraint or condition of the network management service consumer entity for an intent expectation. For example, the network management service consumer entity may restrict action duration of the intent expectation by using the expectation context.

The intent may further include a target context. The target context may represent a constraint or condition of the network management service consumer entity for an expectation target. For example, the network management service consumer entity may restrict action duration of the expectation target by using the target context.

The intent may further include an object context. The object context may represent a constraint or condition of the network management service consumer entity for a network object to which the intent is applied. For example, the network management service consumer entity may indicate, by using the object context, an area of the network object to which the intent is applied.

The intent expectation, the expectation target, and the intent context described above may be used as information elements in an information object class (information object class, IOC) in an intent creation request. The network management service consumer entity may express a requirement for a network management service by sending the foregoing information elements to a network management service producer entity.

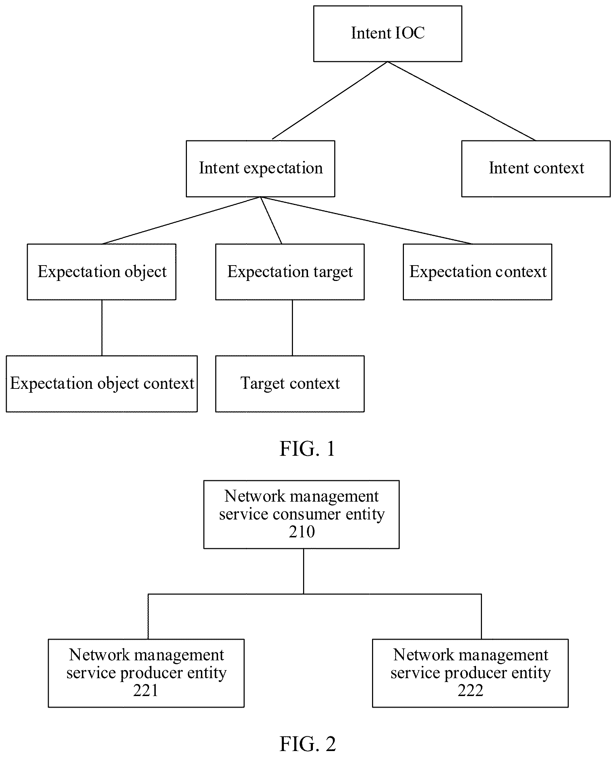

An information element in an intent IOC may express a requirement for a network management service by using a specific structure. For example, FIG. 1 is a diagram of a structure of an intent IOC.

Refer to FIG. 1. The intent IOC includes an intent expectation and an intent context. The intent expectation includes an expectation object, an expectation target, and an expectation context. The expectation object includes an expectation object context, and the expectation target includes a target context. It may be understood that a non-context-type information element (for example, an intent IOC, an intent expectation, an expectation object, or an expectation target) may include a context-type information element (for example, an intent context, an expectation object context, a target context, or an expectation context), and the context-type information element can be used for restricting the non-context-type information element.

It may be understood that FIG. 1 is an example of a relationship between attributes in the intent IOC. Based on a network management service requirement, the intent IOC may further include another attribute. This is not particularly limited in this application. It may be further understood that a quantity of attributes of a same type is not particularly limited in this application. For example, one intent IOC may include one or more parallel intent expectation attributes, and one intent expectation may alternatively include one or more parallel expectation target attributes.

### 3. Network management intent template

The network management intent template is templated description information of a network management intent, and may also be referred to as a network management service requirement template. A name is not limited in embodiments of this application. The intent template may be used for specifying syntax and semantics of various attribute expressions described above. For example, the intent template may specify a field type, a value type, and the like that may be used by each attribute in an IOC. For example, the intent template may include intent expectation description information that is used for specifying how an intent expectation is expressed. The intent expectation description information may specify a type of an expectation target attribute that may be included in the intent expectation, for example, a delay, a bandwidth, or a maximum quantity of users. The intent expectation description information may further specify a field type of each expectation target. For example, a field type of an expectation target about a delay is a character string, a field type of an expectation target about a bandwidth is a character string, and a field type of an expectation target about a maximum quantity of users is an integer. For another example, the intent template may further include intent context description information that specifies how an intent context and an expectation context are expressed. The intent context description information may be used for specifying a field type and the like of the intent context. This is not particularly limited in this application.

### 4. Intent expression

In embodiments of this application, the intent expression is an informational expression for expressing a network management service intent, and may be an instantiation result of a network management intent template. A consumer of a network management intent may instantiate an intent IOC based on the intent template to generate the intent expression. The intent expression generated after the instantiation can be used for a specific network service. For example, the intent expression may be represented by an attribute-value key-value pair (for example, [attribute, value]) list of the network management service intent.

For example, the intent expression includes a performance indicator information instance, a network object information instance, and a context information instance.

For example, the performance indicator information instance may include a value or a value range of a target indicator requirement corresponding to performance indicator information. For example, a target indicator requirement corresponding to a performance indicator information template includes a bandwidth parameter, and a performance indicator information instance includes that a value of the bandwidth parameter is 20 M, or a value range of the bandwidth parameter is 10 M to 15 M. For example, the target indicator requirement corresponding to the performance indicator information template includes a delay parameter, and a delay parameter instance includes that a value of the delay parameter is 2s, or a value range of the delay parameter is 1s to 5s.

A target network object indicated by the network object information instance is an instantiation result of a target network object indicated by a network object information template. For example, the target network object indicated by the network object information instance is one of target network objects indicated by the network object information template, to be specific, one of a physical entity or a logical entity that indicates to implement a network management service. In this case, the network object information instance indicates a specific network object. For example, the network object information template indicates a network service, and the network object information instance indicates an energy saving service.

The context information instance indicates a constraint condition of the network management intent expression. For example, the context information instance includes a constraint parameter of the network management intent expression. For example, the context information instance may include information about a source end and a sink end that correspond to a target network object indicated by a network object instance.

An intent expectation information instance includes a performance indicator information instance and a network object information instance.

In embodiments of this application, an "intent" transmitted by using a message is an intent expression.

### 5. Intent instance

The network management intent instance is a network management intent processing process locally created by a network management service provider entity based on a received network management intent expression (for example, a performance indicator information instance, a network object information instance, or a context information instance).

The network management intent processing process is used for processing the network management intent expression. For example, the network management intent processing process may include an identifier, and the identifier is used for identifying the process. The network management intent processing process may include a computing resource, and the computing resource is used for performing operations such as network management intent translation and database (for example, a semantic knowledge base) query. The network management intent processing process may include a storage resource, and the storage resource is used for storing the network management intent expression, a network management intent translation result, and the like.

The network management intent translation is used for converting the network management intent expression into a corresponding management action group. The management action group may be instructions applied to a physical entity or a logical entity, for example, adjusting an antenna tilt angle of a base station or turning on an energy saving switch of a cell.

### 6. Network management action group (actions)

The network management action group is one or more network management actions generated by a network management service producer entity based on an intent expression, and the network management service producer entity performs the one or more network management actions to satisfy an intent of a network management service consumer entity. The network management action group may also be referred to as a management operation or an intent operation. The network management action group may be an operation instruction set for an expectation object (for example, a physical entity or a logical entity to which the intent is applied and that is in a network system), and includes one or more instructions, for example, adjusting an antenna tilt angle of a base station or turning on an energy saving switch of a cell.

The network management service producer entity may generate a plurality of management action groups based on the intent expression. In an execution process, the network management service producer entity may select a part of the management action groups from the plurality of management action groups for execution at a single time. In other words, the management action group generated by the network management service producer entity based on intent expression translation is an optional operation that can be used to satisfy the intent. The network management service producer entity may select one of the network management action groups for execution to satisfy the intent, or may select a network management action group for execution for a plurality of times to satisfy the intent.

The foregoing describes related terms in embodiments of this application. An application scenario to which an embodiment of this application is applicable is described below with reference to FIG. 2.

FIG. 2 is a diagram of a structure of a communication system to which an embodiment of this application is applicable. An apparatus that may be used in the communication system is first described.
1. A network management service consumer entity 210 may be configured to: invoke a management service, or invoke an intent service to manage a network system. For example, the network management service consumer entity 210 may instantiate an intent template, set an intent expectation and an intent context for the network system to generate an intent expression, and send the intent expression to a network management service producer entity 220 to implement the expectation for the network system.

The network management service consumer entity 210 may also be referred to as a network management service consumer, an intent management service consumer (intent management service consumer), an intent consumer (intent consumer), an intent owner (intent owner), or the like. In a future communication system, the network management service consumer entity may alternatively have another name. This is not particularly limited in this application.

2. Network management service producer entities 221 and 222 may be configured to provide a management service. For example, the network management service producer entities 221 and 222 may receive the intent expression from the network management service consumer entity 210, and perform, based on the intent expression, procedures of intent translation, intent management, and intent execution and maintenance.

The network management service producer entities 221 and 222 may also be referred to as intent management service providers (intent management service providers), network management service producers, intent providers (intent providers), intent handlers (intent handlers), or the like. In a future communication system, the network management service producer entity may alternatively have another name. This is not particularly limited in this application.

It may be understood that the foregoing entities may be network elements in a hardware device, or may be software functions running on dedicated hardware, or may be virtualization functions instantiated on a platform (for example, a cloud platform). It may be understood that the foregoing entities may be implemented by one device, or may be implemented by a plurality of devices together. In addition, the foregoing entities may alternatively be functional modules in a system, for example, functional modules in a network management system (network management system, NMS), an equipment management system (equipment management system, EMS), or a device, for example, one or more functional modules in a network equipment (network equipment, NE), and the network equipment may be a base station or a core network entity.

For example, the network management service consumer entity 210 may be deployed in an NMS, the network management service producer entities 221 and 222 may be deployed in different EMSs, and information exchange between the network management service consumer entity 210 and the network management service producer entities 221 and 222 may be performed by using an interface between the NMS and the EMS.

For another example, the network management service consumer entity 210 may be deployed in an EMS, the network management service producer entities 221 and 222 may be deployed in different NEs, and information exchange between the network management service consumer entity 210 and the network management service producer entities 221 and 222 may be performed by using an interface between the NMS and the EMS.

It may be understood that the solution of this application may be further applied to another system including a corresponding entity. This is not limited in this application, and is not specifically limited in embodiments of this application.

For ease of description, the network management service consumer entity is referred to as a consumer entity for short, and the network management service producer entity is referred to as a producer entity for short.

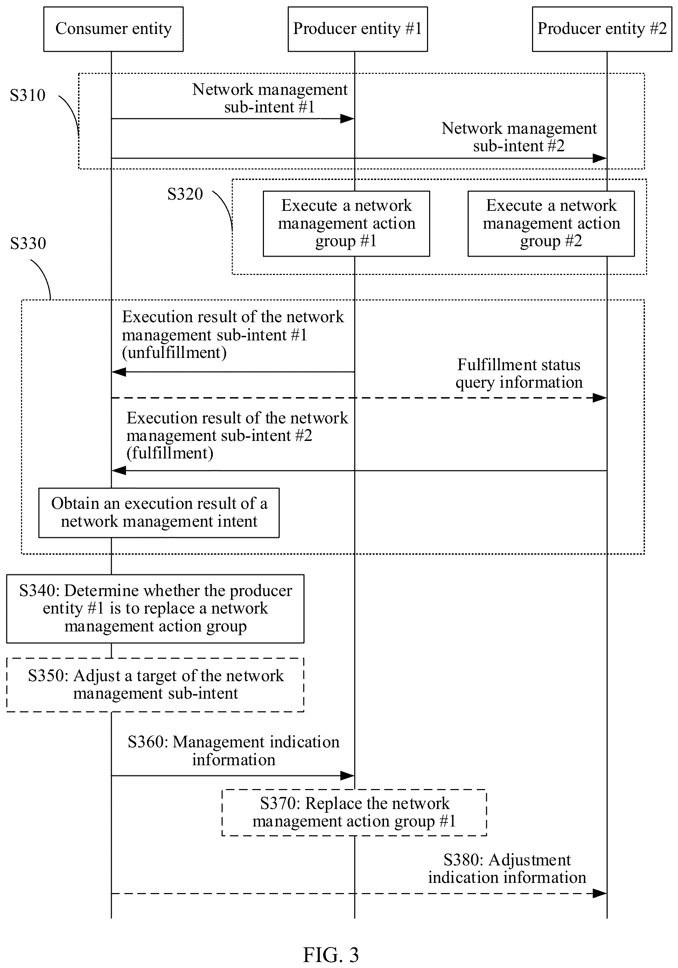

A consumer entity may decompose one network management intent into a plurality of network management sub-intents, and a plurality of producer entities respectively execute the plurality of network management sub-intents, to fulfill a target of each network management sub-intents, so as to fulfill a target of the network management intent. However, in a process of executing the network management intent, to fulfill the target of each network management sub-intent, a waste of resources may be caused. Embodiments of this application provide a network management intent execution method and an apparatus, to improve execution performance of a network management intent. The following first describes the method in embodiments of this application with reference to FIG. 3.

FIG. 3 is a schematic flowchart of a network management intent execution method according to an embodiment of this application.

S310: A consumer entity sends, to N producer entities in a one-to-one manner, N network management sub-intents obtained by decomposing a network management intent. Correspondingly, the N producer entities receive, from the consumer entity, the corresponding N network management sub-intents obtained by decomposing the network management intent.

It may be understood that N is an integer greater than or equal to 2. A quantity of producer entities is not particularly limited in this embodiment of this application. One consumer entity may communicate with a plurality of producer entities. For ease of understanding, in this embodiment of this application, an example in which one consumer entity communicates with two producer entities (a producer entity #1 and a producer entity #2) is used for description.

In such a scenario in which a target of the network management intent is fulfilled by executing the network management sub-intent, the consumer entity may also be referred to as a system for the network management intent, and the producer entity may also be referred to as a system for the network management sub-intent. Fulfilling (fulfill) the target of the network management intent may also be described as satisfying the target of the network management intent, achieving the target of network management intent, or the like.

It may be further understood that a quantity of network management sub-intents obtained by decomposing one network management intent is not particularly limited in this embodiment of this application, and the quantity of network management sub-intents obtained through decomposition may be the same as or different from the quantity of producer entities. For ease of understanding, in this embodiment of this application, an example in which one network management intent is decomposed into two network management sub-intents (a network management sub-intent #1 and a network management sub-intent #2) is used for description.

For example, the consumer entity sends the network management sub-intent #1 to the producer entity #1, and the consumer entity sends the network management sub-intent #2 to the producer entity #2.

It may be understood that, in this application, the consumer entity and the producer entity may directly communicate with each other, or may communicate with each other via another entity. This is not particularly limited in this application. For example, the consumer entity may directly send the network management sub-intent #1 to the producer entity #1; or the consumer entity may send the network management sub-intent #1 to a consumer entity #1 corresponding to a system for the network management sub-intent #1, and the consumer entity #1 forwards the network management sub-intent #1 to the producer entity #1. Similarly, the producer entity #1 may directly send information to the consumer entity; or the producer entity may send information to the consumer entity #1 corresponding to the system for the network management sub-intent #1, and the consumer entity #1 forwards the information to the consumer entity. Details are not described below.

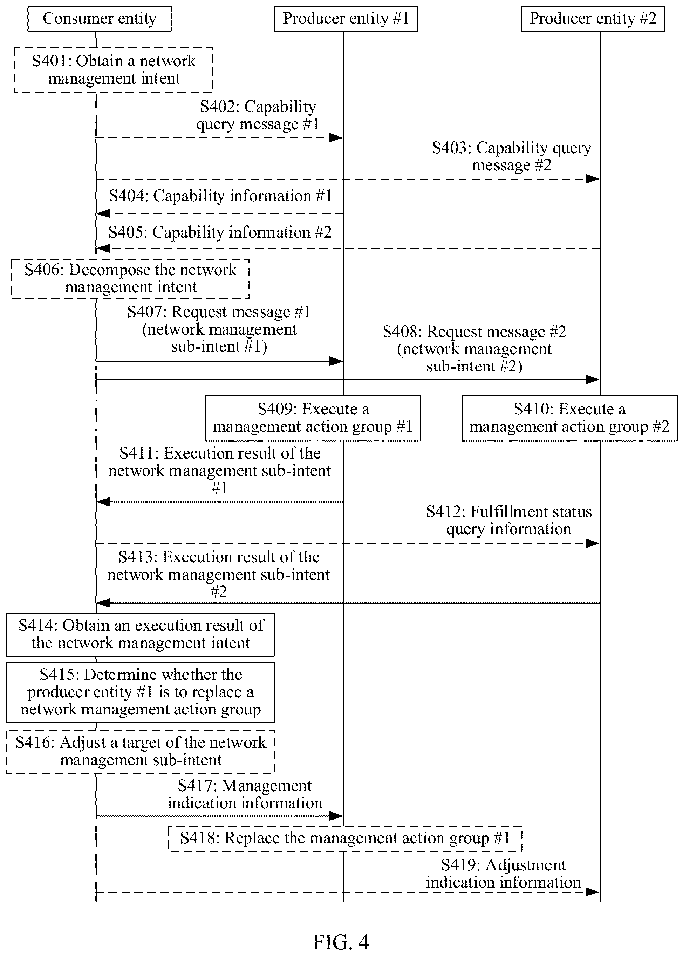

The consumer entity may perform decomposition based on the target of the network management intent. For example, the network management intent is an energy saving intent, and a target of the energy saving intent is that a value of saved base station power in a specific area reaches 1,000 kW. The consumer entity may decompose the network management intent into a network management sub-intent #1: a value of saved base station power in a sub-area #1 reaching 300 kW and a network management sub-intent #2: a value of saved base station power in a sub-area #2 reaching 700 kW. Division into the sub-area #1 and the sub-area #2 is performed by the consumer entity based on the specific area. For more detailed descriptions of decomposing the network management intent by the consumer entity, refer to the following descriptions in FIG. 4. Details are not described herein.

In this embodiment of this application, the network management intent may be referred to as an end-to-end intent, and a plurality of network management sub-intents are a plurality of different management domain intents obtained by decomposing the end-to-end intent.

The consumer entity may send intent creation request messages to the N producer entities respectively, and include corresponding network management sub-intents in the intent creation request messages. For example, the consumer entity may send an intent creation request message #1 to the producer entity #1. The intent creation request message #1 includes the network management sub-intent #1, and the network management sub-intent #1 may include a target of the network management sub-intent #1. For example, the network management sub-intent #1 may use a data structure similar to that in FIG. 1, including information such as an intent expectation, an expectation target, and an intent context. The consumer entity may further send an intent creation request message #2 to the producer entity #2. The intent creation request message #2 includes the network management sub-intent #2. Descriptions of the network management sub-intent #2 may be similar to that of the network management sub-intent #1. Details are not described herein again.

In this embodiment of this application, the producer entity determines, based on an indication of the consumer entity, whether to replace a management action group, and does not replace a management action group based on a fulfillment status of the network management sub-intent. The manner of determining whether to replace a management action group may be default for the consumer entity and the producer entity, or may be indicated by the consumer entity to the producer entity.

For example, the consumer entity respectively sends action group freezing indication information to a plurality of producer entities. Correspondingly, the plurality of producer entities receive the action group freezing indication information from the consumer entity.

The action group freezing indication information indicates the plurality of producer entities not to replace network management action groups based on execution results of corresponding network management sub-intents. For example, the consumer entity sends action group freezing indication information to the producer entity #1, and the consumer entity sends action group freezing indication information to the producer entity #2. The consumer entity may directly send the action group freezing indication information to the plurality of producer entities, or the consumer entity may include the action group freezing indication information in the intent creation request message. For example, the intent creation request message includes a network management sub-intent and action group freezing indication information (for example, an actionfrozen information element); or the intent creation request message includes a network management sub-intent, and the network management sub-intent includes action group freezing indication information (where for example, an intent context in the network management sub-intent includes the action group freezing indication information). Therefore, before receiving management indication information from the consumer entity, the producer entity may freeze replacement of the management action group, to reduce an unnecessary replacement action.

In addition, the consumer entity may further indicate when the plurality of producer entities return the execution results of the network management sub-intents. For example, the consumer entity sends, to the plurality of producer entities respectively, trigger conditions for returning the execution results of the network management sub-intents. Correspondingly, the plurality of producer entities receive, from the consumer entity, the trigger conditions for returning the execution results of the network management sub-intents.

For example, the consumer entity sends, to the producer entity #1, a trigger condition #1 for returning an execution result of the network management sub-intent #1, and the consumer entity sends, to the producer entity #2, a trigger condition #2 for returning an execution result of the network management sub-intent #2. For example, the trigger condition may be that a target of a corresponding network management sub-intent fails to be fulfilled within detection time. For example, the consumer entity may indicate the producer entity to detect, within 30 minutes, whether the target of the network management sub-intent is fulfilled. If the producer entity fails to fulfill the target of the network management sub-intent within 30 minutes, the producer entity returns an execution result of the network management sub-intent. In this case, the producer entity receives the execution result indicating that the network management sub-intent fails to be fulfilled, and may actively query another producer entity for an execution result of another network management sub-intent.

For another example, the consumer entity may indicate time and/or a periodicity at which each of the plurality of producer entities sends the execution result of the network management sub-intent. For example, the consumer entity may indicate the producer entity to return the execution result one hour after the network management sub-intent is received, indicate the producer entity to return the execution result every two hours, or the like. This is not particularly limited in this application.

The consumer entity may directly send the trigger conditions to the plurality of producer entities, or the consumer entity may include the trigger conditions in the intent creation request messages. For example, the intent creation request message includes a network management sub-intent and a trigger condition (for example, a returnperiod or duration information element); or the intent creation request message includes a network management sub-intent, and the network management sub-intent includes a trigger condition (where for example, an intent context in the network management sub-intent includes the trigger condition). Therefore, the producer entity may return the execution result of the network management sub-intent based on the trigger condition or in a specific case.

S320: The plurality of producer entities execute network management action groups respectively based on different network management sub-intents.

For example, the producer entity #1 executes a network management action group #1 based on the network management sub-intent #1, and the producer entity #2 executes a network management action group #2 based on the network management sub-intent #2.

For example, the producer entity #1 may execute the management action group #1 based on the network management sub-intent #1, to fulfill the target of the network management sub-intent #1. For example, the network management sub-intent #1 is an energy saving intent, and to fulfill a target of the energy saving intent, the producer entity #1 determines that the management action group #1 that can be executed includes timing carrier shutdown, symbol shutdown, and radio frequency module dormancy. The timing carrier shutdown may mean that in a specific time period (for example, in an early morning period in which a data transmission amount is small), the producer entity #1 may trigger a managed entity of the network management sub-intent #1 to shut down a carrier of a radio frequency module to save energy. The symbol shutdown may mean that when no data is carried on a symbol, the producer entity #1 may trigger the managed entity to turn off a power amplifier to save energy. The radio frequency module dormancy may mean that in a specific time period, the producer entity #1 may trigger a radio frequency module of a base station to be in a dormancy state to save energy. The producer entity #1 may execute any one or more of the timing carrier shutdown, the symbol shutdown, and the radio frequency module dormancy. For example, when the producer entity #1 executes the timing carrier shutdown, the producer entity #1 may send a carrier shutdown instruction to all base stations in the sub-area #1, so that the managed entity executes carrier shutdown.

It may be understood that, in the foregoing example, the producer entity is an equipment management system that can manage a base station. The producer entity executing the network management action group may include that the producer entity triggers the managed entity to execute the network management action group. In this case, the consumer entity may be a network management system. This embodiment of this application may also be applied to a scenario in which the producer entity is a network element (for example, a base station). In this case, the consumer entity may be an equipment management system. For ease of description, the following mainly describes the execution method provided in this embodiment of this application by using an example in which the producer entity is an equipment management system. However, this is not particularly limited in this application.

It may be understood that, in this embodiment of this application, an example in which the producer entity #1 is used as a producer entity that fails to fulfill a target and the producer entity #2 is used as a producer entity that fulfills a target is used. To be specific, the producer entity #1 fails to fulfill the target of the network management sub-intent #1 by executing the management action group #1, and the producer entity #2 fulfills a target of the network management sub-intent #2 by executing the management action group #2. For example, the target of the network management sub-intent #1 is that the value of the saved power reaches 300 kW (where the target of the network management intent is that the value of the saved power reaches 1,000 kW). However, the producer entity #1 saves energy by 280 kW by executing the management action group #1, and in this case, the target of the network management sub-intent #1 fails to be fulfilled. The target of the network management sub-intent #2 is that the value of the saved power reaches 700 kW. The producer entity #2 saves energy by 750 kW by executing the management action group #2, and in this case, the target of the network management sub-intent #2 is fulfilled.

In this application, after executing the management action group #1, that the target of the network management sub-intent #1 fails to be fulfilled does not cause the producer entity #1 to replace the management action group #1. For example, in the foregoing example, the producer entity #1 saves the energy by 280 kW by executing the management action group #1, and the producer entity #2 saves the energy by 750 kW by executing the management action group #2. The value of the power saved by the producer entity #1 and the value of the power saved by the producer entity #2 have reached 280+750=1,030 kW, that is, the total power value is greater than the target 1,000 kW. In this case, the target of the network management intent is fulfilled. In this case, actually, it is unnecessary for the producer entity #1 to replace the management action group #1. If the producer entity #1 replaces the management action group #1 based on that the target of the network management sub-intent #1 fails to be fulfilled, the base station may frequently enable or disable an energy saving feature, affecting execution of another service of the base station, and consequently reducing service coverage, a data capacity, and user experience. For example, unnecessary carrier shutdown causes reduction in a throughput rate of a cell and a throughput rate of a user. Therefore, in the solution provided in this embodiment of this application, the producer entity #1 may avoid an unnecessary action of replacing the management action group #1, to improve execution performance of the network management intent.

S330: The consumer entity receives N execution results corresponding to the N network management sub-intents, where the N execution results are correspondingly from the N network management entities.

Correspondingly, the N producer entities respectively send the execution results of the N network management sub-intents.

For example, the producer entity #1 sends the execution result of the network management sub-intent #1 to the consumer entity, and the producer entity #2 sends the execution result of the network management sub-intent #2 to the consumer entity. The consumer entity determines an execution result of the network management intent based on the execution result of the network management sub-intent #1 and the execution result of the network management sub-intent #2.

The producer entity may detect a fulfillment status of the network management sub-intent, and return an execution result to the consumer entity based on the fulfillment status. For example, execution results of different network management sub-intents respectively include performance indicator values of managed entities of the corresponding network management sub-intents. For example, the execution result that is of the network management sub-intent #1 and that is returned by the producer network element #1 includes a performance indicator value of the managed entity of the network management sub-intent #1. For example, the execution result includes a fulfillment status information element (for example, a fulfillmentinfo information element), and the fulfillment status information element may include a fulfillment status sub-information element (for example, a fulfillmentstatus sub-information element) and a performance indicator information element (for example, a value sub-information element). The fulfillment status sub-information element may indicate whether the target of the network management sub-intent is fulfilled. The value sub-information element may indicate the performance indicator value. For example, a value sub-information element in the execution result of the network management sub-intent #1 may indicate that a value of the saved power is 280 kW. It can be learned that the consumer entity may determine, by using the performance indicator values returned by the plurality of producer entities, whether the target of the network management intent is fulfilled, instead of determining, based on that the target of each network management sub-intent is fulfilled, that the target of the network management intent is fulfilled. In this way, whether the target of the network management intent is fulfilled is determined more appropriately.

It may be understood that the performance indicator value may also be referred to as a current performance value (current performance value) or an achieved value for fulfillment (achieved value for fulfillment), and may be expressed in various forms. For example, the performance indicator value may be a performance indicator value (for example, the value 280 kW of the saved power) that a managed entity of a current network management sub-intent has achieved, or may be a difference of the managed entity of the current network management sub-intent from fulfilling the target (where for example, a difference between the value of the saved power and the target is 20 kW). This is not particularly limited in this application.

Optionally, an execution result that is of a network management sub-intent and that is returned by a producer entity that fails to fulfill a target further includes action group exhaustion indication information. The action group exhaustion indication information indicates whether the producer entity that fails to fulfill the target has a network management action group that can be used for replacement. For example, the execution result that is of the network management sub-intent #1 and that is returned by the producer entity #1 may include the action group exhaustion indication information. For example, an action group exhaustion information element (for example, actionAllTried) may be defined in the execution result of the network management sub-intent #1. If the producer entity #1 generates, based on the network management sub-intent #1, three management action groups: timing carrier shutdown, symbol shutdown, and radio frequency module dormancy, and the producer entity #1 executes the timing carrier shutdown but does not execute the symbol shutdown and the radio frequency module dormancy, the action group exhaustion indication information indicates that the producer entity #1 can replace a management action group. If the producer entity #1 has executed all management action groups, the action group exhaustion indication information indicates that the producer entity #1 cannot replace a management action group.

It may be understood that an execution result returned by a producer entity that fulfills a target (a producer entity that has fulfilled a target of a corresponding network management sub-intent) may include the action group exhaustion indication information, or may not include the action group exhaustion indication information. This is not particularly limited in this application.

If the consumer entity indicates, to the producer entity, the trigger condition for returning the execution result of the network management sub-intent (for example, as described in step S310), the producer entity may return the execution result of the network management sub-intent to the consumer entity in response to that the trigger condition is satisfied. For example, the consumer entity indicates, to the producer entity, that the producer entity that fails to fulfill the target returns the execution result of the network management sub-intent to the consumer entity if the target of the network management sub-intent fails to be fulfilled within detection duration. The consumer entity may send, based on the result returned by the producer entity that fails to fulfill the target or if a target of a network management sub-intent fails to be fulfilled, execution result query information to another producer entity that does not return an execution result. Further, the another producer entity may return an execution result of a corresponding network management sub-intent to the consumer entity in response to the execution result query information. For example, as shown in FIG. 3, if the producer entity #1 fails to fulfill the target of the network management sub-intent #1 within detection duration, the producer entity #1 returns the execution result of the network management sub-intent #1 to the consumer entity in response to that the trigger condition is satisfied. The consumer entity actively sends execution result query information to the producer entity #2 based on the execution result of the network management intent #1. The execution result query information is for requesting the producer entity #2 to return the execution result. The producer entity #2 returns the execution result of the network management sub-intent #2 to the consumer entity in response to the execution result query information. Further, the consumer entity can determine the execution result of the network management intent based on the execution results of different network management sub-intents.

If the consumer entity indicates, to the producer entities, time and/or periodicities for returning the execution results of the network management sub-intents, the producer entity may return the execution results of the network management sub-intents to the consumer entity based on the time and/or the periodicities. This is not particularly limited in this application.

The consumer entity may determine, based on the execution results that are of different network management sub-intents and that are returned by the plurality of producer entities, whether the network management intent is fulfilled. A manner of determining, by the consumer entity, whether the network management intent is fulfilled is related to a type of the network management intent or a manner of decomposing the network management intent. For example, for the energy saving intent in which the value of the saved power reaches 1,000 kW, the consumer entity may perform summation on the performance indicator value (280 kW) in the execution result of the network management sub-intent #1 and a performance indicator value (750 kW) in the execution result of the network management sub-intent #2, to determine that the target (1,000 kW) of the network management intent is fulfilled. For another example, when a throughput rate average in a specific area reaches a specific threshold, the consumer entity may perform weighted averaging on returned performance indicator values, to determine whether the target of the network management intent is fulfilled. This is not particularly limited in this application.

S340: The consumer entity determines whether the producer entity that fails to fulfill the target is to replace the management action group.

For example, the consumer entity may determine, based on the execution result of the network management intent, whether the producer entity that fails to fulfill the target is to replace the management action group #1. When the execution result of the network management intent is fulfillment, the consumer entity may determine that the producer entity that fails to fulfill the target is not to replace the network management action group. When the execution result of the network management intent is unfulfillment, the consumer entity may determine that the producer entity that fails to fulfill the target is to replace the network management action group.

If the execution result returned by the producer entity that fails to fulfill the target further includes the action group exhaustion indication information, when the execution result of the network management intent is unfulfillment, the consumer entity may determine, based on the execution result of the network management intent and the action group exhaustion indication information, whether the producer entity that fails to fulfill the target is to replace the management action group. When the action group exhaustion indication information indicates that the producer entity that fails to fulfill the target has a management action group that can be used for replacement, the consumer entity may determine that the producer entity #1 is to replace the management action group. When the action group exhaustion indication information indicates that the producer entity that fails to fulfill the target has no management action group that can be used for replacement, even if the target of the network management intent fails to be fulfilled, the consumer entity does not indicate the producer entity that fails to fulfill the target to replace the management action group. In this case, the consumer entity may re-perform the foregoing steps from step S310, to be specific, the consumer entity may re-decompose the network management intent.

The consumer entity may further adjust a target of at least one network management sub-intent based on the execution results that are of different network management sub-intents and that are returned by the plurality of producer entities. In this case, the consumer entity may perform the following step S350.

Optionally, in S350, the consumer entity adjusts the target of the network management sub-intent.

For example, the consumer entity adjusts the target of the network management sub-intent corresponding to the producer entity that fails to fulfill the target. The energy saving intent (where the target is 1,000 kW) is still used as an example. The value of the power saved by producer entity #1 is 280 kW (where the target is 300 kW), and the value of the power saved by the producer entity #2 is 750 kW (where the target is 700 kW). The consumer entity may adjust, based on the execution result, the target of the network management sub-intent #1 corresponding to the producer entity #1 to reaching 270 kW, so that both the target of the network management sub-intent #1 and the target of the network management intent can be fulfilled. In addition, the consumer entity may further adjust the target of the network management sub-intent #2 corresponding to the producer entity #2 to reaching 730 kW, so that a manner of decomposing the network management intent is more appropriate.

S360: The consumer entity sends management indication information to the producer entity that fails to fulfill the target.

Correspondingly, the producer entity that fails to fulfill the target receives the management indication information from the consumer entity.

The producer entity that fails to fulfill the target is a producer entity in the plurality of producer entities that fails to fulfill a target of a corresponding network management sub-intent. The management indication information indicates whether the producer entity that fails to fulfill the target is to replace the network management action group for fulfilling the target of the corresponding network management sub-intent.

For example, the consumer entity sends management indication information to the producer entity #1, where the management indication information indicates whether the producer entity #1 is to replace the network management action group #1 for fulfilling the target of the network management sub-intent #1.

If the consumer entity further adjusts the target of the network management sub-intent #1 by using step S350 described above, the management indication information may further indicate an adjusted target of the network management sub-intent #1.

The producer entity that fails to fulfill the target (the producer entity #1) may determine, based on the management indication information, whether to replace the management action group. When the management indication information indicates not to replace the management action group, the producer entity #1 does not replace the management action group #1. In other words, the producer entity #1 does not perform an unnecessary operation of replacing the management action group, to avoid a waste of resources. When the management indication information indicates to replace the management action group, the producer entity that fails to fulfill the target may perform the following action S370.

Optionally, in S370, the producer entity that fails to fulfill the target replaces the management action group.

For example, the producer entity #1 replaces the management action group #1.

The producer entity #1 may determine, based on the management indication information, to replace the management action group. When the management indication information indicates to replace the management action group #1, the producer entity #1 may select another executable (for example, the symbol shutdown or the radio frequency module dormancy that is not executed) management action group for execution, to fulfill the target of the network management sub-intent #1.

If the consumer entity further adjusts the target of the network management sub-intent #2 in step S360, the consumer entity may further perform the following step S380.

Optionally, in S380, the consumer entity sends adjustment indication information to the producer entity that fulfills the target (the producer entity #2). Correspondingly, the producer entity that fulfills the target receives the adjustment indication information from the consumer entity.

The adjustment indication information indicates an adjusted target of the network sub-intent #2. Therefore, the producer entity #2 may execute the network management sub-intent #2 based on the adjusted target during duration of the network management sub-intent #2.

According to this technical solution, the consumer entity can determine, based on fulfillment statuses of different network management sub-intents, whether the producer entity that fails to fulfill the target is to replace the management action group. The producer entity that fails to fulfill the target determines, based on the indication of the consumer entity, whether to replace the management action group, instead of replacing the management action group based on that the target of the network management sub-intent fails to be fulfilled. This can avoid an unnecessary action of replacing a management action group, and improve a manner of managing the network management intent.

The foregoing describes the network management intent execution method provided in this application. Before sending different network management sub-intents to the plurality of producer entities, the consumer entity may further collect capability information of the producer entity, to decompose the network management intent. For ease of understanding embodiments of this application, the following still uses the producer entity #1 and the producer entity #2 as an example to briefly describe a network management intent execution method with reference to FIG. 4. For more detailed descriptions of related steps, refer to FIG. 3. Details are not described below.

FIG. 4 is another schematic flowchart of a network management intent method according to an embodiment of this application.

Optionally, in S401, a consumer entity obtains a network management service intent.

The consumer entity may obtain the network management service intent, for example, the data structure shown in FIG. 1. The management service intent may include information such as an intent expectation, a target, and an intent context.

Optionally, in S402, the consumer entity sends capability query information #1 to a producer entity #1.

The capability query information #1 may be for requesting the producer entity #1 to return a capability of the producer entity #1 to execute the network management intent. For example, the consumer entity may determine a capability attribute related to the network management intent, for example, an energy saving attribute or a delay attribute. The capability query information #1 may include the capability attribute, and indicates the producer entity #1 to return capability information corresponding to the capability attribute.

Optionally, in S403, the consumer entity sends capability query information #2 to a producer entity #2.

The capability query information #2 may be similar to the capability query information #1. Refer to the foregoing descriptions.

Optionally, in S404, the producer entity #1 sends capability information #1 to the consumer entity.

The producer entity #1 may return a capability value to the consumer entity based on the capability attribute in the capability query information #1. For example, the capability query information #1 is for requesting to query an energy saving capability, and the producer entity #1 may return, to the consumer entity, a value or a range of power that can be saved, for example, 200 kW to 500 kW.

Optionally, in S405, the producer entity #2 sends capability information #2 to the consumer entity.

The capability information #2 may be similar to the capability information #1. Refer to the foregoing descriptions.

Optionally, in S406, the consumer entity decomposes the network management intent based on the capability information #1 and the capability information #2.

For example, the consumer entity may decompose a target of the network management intent (for example, saving energy by 1,000 kW) into a target of a network management sub-intent #1 (for example, saving energy by 300 kW) and a target of a network management sub-intent #2 (for example, saving energy by 700 kW), and decompose a managed object of the network management intent into a managed object of the network management sub-intent #1 and a managed object of the network management sub-intent #2.

S407: The consumer entity sends a request message #1 to the producer entity #1.

The request message #1 is for requesting the producer entity #1 to execute the network management sub-intent #1. The request message #1 includes the network management sub-intent #1. The network management sub-intent #1 includes the target of the network management sub-intent #1, and may further include the managed object. The request message #1 may further include action group freezing indication information and/or a trigger condition.

S408: The consumer entity sends a request message #2 to the producer entity #2.

The request message #2 is for requesting the producer entity #2 to execute the network management sub-intent #2. The request message #2 includes the network management sub-intent #2. The network management sub-intent #2 includes the target of the network management sub-intent #2, and may further include the managed object. The request message #2 may further include action group freezing indication information and/or a trigger condition.

S409: The producer entity #1 executes a management action group #1.

The producer entity #1 executes the management action group #1 to fulfill the target of the network management sub-intent #1. Even if the producer entity #1 fails to fulfill the target of the network management sub-intent #1, the producer entity #1 does not replace the management action group in this case.

S410: The producer entity #2 executes a management action group #2.

The producer entity #2 executes the management action group #2 to fulfill the target of the network management sub-intent #2. Even if the producer entity #2 fails to fulfill the target of the network management sub-intent #2, the producer entity #2 does not replace the management action group in this case.

S411: The producer entity #1 sends an execution result of the network management sub-intent #1 to the consumer entity.

Optionally, in S412, the consumer entity sends fulfillment status query information to the producer entity #2.

S413: The producer entity #2 sends an execution result of the network management sub-intent #2 to the consumer entity.

S414: The consumer entity obtains an execution result of the network management intent.

For descriptions of steps S411 to S414, refer to the foregoing descriptions of step S330. Details are not described herein again.

S415: The consumer entity determines whether the producer entity #1 is to replace the network management action group.

For descriptions of step S415, refer to the foregoing descriptions of step S340. Details are not described herein again.

Optionally, in S416, the consumer entity adjusts the target of the network management sub-intent.

For descriptions of step S416, refer to the foregoing descriptions of step S350. Details are not described herein again.

S417: The consumer entity sends management indication information to the producer entity #1.

For descriptions of step S417, refer to the foregoing descriptions of step S360. Details are not described herein again.

Optionally, in S418, the producer entity #1 determines, based on the management indication information, to replace the management action group.

For descriptions of step S418, refer to the foregoing descriptions of step S370. Details are not described herein again.

Optionally, in S419, the consumer entity sends adjustment indication information to the producer entity #2.

For descriptions of step S419, refer to the foregoing descriptions of step S380. Details are not described herein again.

According to this technical solution, the consumer entity can determine, based on fulfillment statuses of different network management sub-intents, whether a producer entity that fails to fulfill a target is to replace a management action group. The producer entity that fails to fulfill the target determines, based on an indication of the consumer entity, whether to replace the management action group, instead of replacing the management action group based on that the target of the network management sub-intent fails to be fulfilled. This can avoid an unnecessary action of replacing a management action group, and improve execution performance of the network management intent.

It may be further understood that, in the foregoing method embodiments, the method and operation implemented by the producer entity may alternatively be implemented by a component (for example, a chip or a circuit) of the producer entity. In addition, the method and operation implemented by the consumer entity may alternatively be implemented by a component (for example, a chip or a circuit) of the consumer entity. This is not limited.

In correspondence to the method provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the foregoing method embodiments are also applicable to the following apparatus embodiments.

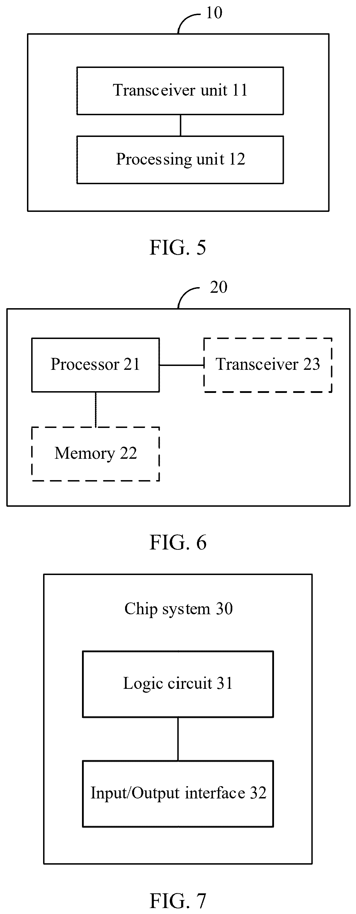

For example, FIG. 5 is a diagram of a communication apparatus 10 according to an embodiment of this application. The apparatus 10 includes a transceiver unit 11 and a processing unit 12. The transceiver unit 11 may be configured to implement a corresponding communication function. The transceiver unit 11 may also be referred to as a communication interface or a communication unit. The processing unit 12 may be configured to perform data or information processing.

Optionally, the apparatus 10 further includes a storage unit. The storage unit may be configured to store instructions and/or data. The processing unit 12 may read the instructions and/or the data in the storage unit, to enable the apparatus to implement the foregoing method embodiments.

In a possible design, the apparatus 10 may be configured to perform an action performed by the producer entity in the foregoing method embodiments. In this case, the apparatus 10 may be the producer entity or a component of the producer entity. The transceiver unit 11 is configured to perform a receiving/sending-related operation on the producer entity side in the foregoing method embodiments. The processing unit 12 is configured to perform a processing-related operation on the producer entity side in the foregoing method embodiments.

In a first possible implementation, the transceiver unit 11 is configured to send, to N network management service producer entities in a one-to-one manner, N network management sub-intents obtained by decomposing a network management intent. The transceiver unit 11 receives N execution results corresponding to the N network management sub-intents, where the N execution results are correspondingly from the N network management entities, and obtains an execution result of the network management intent based on the N execution results, where the N execution results include an execution result indicating unfulfillment. The processing unit 12 is configured to send, based on the execution result of the network management intent, management indication information to a network management service producer entity that fails to fulfill a target, where the network management service producer entity that fails to fulfill the target is a network management service producer entity in the N network management service producer entities that fails to fulfill a target of a corresponding network management sub-intent, and the management indication information indicates whether the network management service producer entity that fails to fulfill the target is to replace a network management action group for fulfilling the target of the corresponding network management sub-intent.

The apparatus 10 may implement steps or procedures corresponding to the producer entity in the method embodiments according to embodiments of this application. The apparatus 10 may include units configured to perform the method performed by the producer entity in the method embodiments according to embodiments of this application. A specific process in which the units perform the foregoing corresponding steps is described in detail in the foregoing method embodiments. For brevity, details are not described herein again.

In another possible design, the apparatus 10 may be configured to perform an action performed by the consumer entity in the foregoing method embodiments. In this case, the apparatus 10 may be the consumer entity or a component of the consumer entity. The transceiver unit 11 is configured to perform a receiving/sending-related operation on the consumer entity side in the foregoing method embodiments. The processing unit 12 is configured to perform a processing-related operation on the consumer entity side in the foregoing method embodiments.

In a first possible implementation, the transceiver unit 11 is configured to receive a network management sub-intent obtained by decomposing a network management intent. The transceiver unit 11 is configured to send an execution result of the network management sub-intent, where the execution result of the network management sub-intent indicates that a target of the network management sub-intent fails to be fulfilled. The transceiver unit 11 is configured to receive management indication information, where the management indication information indicates whether to replace a network management action group for fulfilling the target of the network management sub-intent, and the management indication information is determined based on an execution result of the network management intent.

The apparatus 10 may implement steps or procedures corresponding to the consumer entity in the method embodiments according to embodiments of this application. The apparatus 10 may include units configured to perform the method performed by the consumer entity in the method embodiments according to embodiments of this application. A specific process in which the units perform the foregoing corresponding steps is described in detail in the foregoing method embodiments. For brevity, details are not described herein again.

It may be further understood that the apparatus 10 herein is embodied in a form of a functional unit. The term "unit" herein may be an application specific integrated circuit (application specific integrated circuit, ASIC), an electronic circuit, a processor configured to execute at least one software or firmware program (for example, a shared processor, a dedicated processor, or a packet processor), a memory, a combinational logic circuit, and/or another appropriate component supporting the described functions. In an optional example, a person skilled in the art may understand that the apparatus 10 may be specifically the producer entity in the foregoing embodiments, and may be configured to perform the procedures and/or the steps corresponding to the producer entity in the foregoing method embodiments. Alternatively, the apparatus 10 may be specifically the consumer entity in the foregoing embodiments, and may be configured to perform the procedures and/or the steps corresponding to the consumer entity in the foregoing method embodiments. To avoid repetition, details are not described herein again.

The apparatus 10 in each of the foregoing solutions has a function of implementing corresponding steps performed by a communication device (for example, the producer entity or the consumer entity) in the foregoing method. The function may be implemented by hardware, or may be implemented by hardware executing corresponding software. The hardware or the software includes at least one module corresponding to the foregoing function. For example, the transceiver unit may be replaced with a transceiver (where for example, a sending unit in the transceiver unit may be replaced with a transmitter, and a receiving unit in the transceiver unit may be replaced with a receiver), and another unit, for example, the processing unit, may be replaced with a processor, to respectively perform receiving and sending operations and processing-related operations in the method embodiments.

In addition, the transceiver unit 11 may alternatively be a transceiver circuit (for example, may include a receiver circuit and a transmitter circuit), and the processing unit may be a processing circuit.

It should be noted that the apparatus in FIG. 5 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit that is integrated on the chip. This is not limited herein.

For example, FIG. 6 is a diagram of another communication apparatus 20 according to an embodiment of this application. The apparatus 20 includes a processor 21, and the processor 21 is coupled to a memory 22. Optionally, the apparatus 20 further includes the memory 22. The memory 22 is configured to store a computer program or instructions and/or data. The processor 21 is configured to execute the computer program or the instructions stored in the memory 22, or read the data stored in the memory 22, to perform the method in the foregoing method embodiments.

Optionally, there is at least one processor 21.

Optionally, there is at least one memory 22.

Optionally, the memory 22 and the processor 21 are integrated together or disposed separately.

Optionally, as shown in FIG. 6, the apparatus 20 further includes a transceiver 23, and the transceiver 23 is configured to receive and/or send a signal. For example, the processor 21 is configured to control the transceiver 23 to receive and/or send a signal.

In a solution, the apparatus 20 is configured to implement an operation performed by the producer entity in the foregoing method embodiments.

For example, the processor 21 is configured to execute the computer program or the instructions stored in the memory 22, to implement a related operation performed by the producer entity in the foregoing method embodiments, for example, the method performed by the producer entity in the embodiment shown in FIG. 3.

In another solution, the apparatus 20 is configured to implement an operation performed by the consumer entity in the foregoing method embodiments.

For example, the processor 21 is configured to execute the computer program or the instructions stored in the memory 22, to implement a related operation performed by the consumer entity in the foregoing method embodiments, for example, the method performed by the consumer entity in the embodiment shown in FIG. 3.

It may be understood that the processor mentioned in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM includes the following forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

When the processor is a general-purpose processor, a DSP, an ASIC, an FPGA or another programmable logic device, a discrete gate or a transistor logic device, or a discrete hardware component, the memory (a storage module) may be integrated into the processor.

The memory described in this specification intends to include but is not limited to these memories and any other appropriate types of memories.

For example, FIG. 7 is a diagram of a chip system 30 according to an embodiment of this application. The chip system 30 (or referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, to enable the chip system 30 to implement the methods and functions in embodiments of this application. The input/output interface 32 may be an input/output circuit in the chip system 30, and outputs information processed by the chip system 30, or inputs to-be-processed data or signaling information to the chip system 30 for processing.

Specifically, for example, if the chip system 30 is installed in a producer entity, the logic circuit 31 is coupled to the input/output interface 32, and the input/output interface 32 may input a wake-up signal to the logic circuit 31 for processing.

In a solution, the chip system 30 is configured to implement an operation performed by the producer entity in the foregoing method embodiments.

For example, the logic circuit 31 is configured to implement a processing-related operation performed by the producer entity in the foregoing method embodiments, for example, a processing-related operation performed by the producer entity in the embodiment shown in FIG. 3. The input/output interface 32 is configured to implement a sending-related operation and/or a receiving-related operation performed by the producer entity in the foregoing method embodiments, for example, a sending-related operation and/or a receiving-related operation performed by the producer entity in the embodiment shown in FIG. 3.

In another solution, the chip system 30 is configured to implement an operation performed by the consumer entity in the foregoing method embodiments.

For example, the logic circuit 31 is configured to implement a processing-related operation performed by the consumer entity in the foregoing method embodiments, for example, a processing-related operation performed by the consumer entity in the embodiment shown in FIG. 3. The input/output interface 32 is configured to implement a sending-related operation and/or a receiving-related operation performed by the consumer entity in the foregoing method embodiments, for example, a sending-related operation and/or a receiving-related operation performed by the consumer entity in the embodiment shown in FIG. 3.

An embodiment of this application further provides a computer-readable storage medium. The computer-readable storage medium stores computer instructions for implementing the method performed by a device in the foregoing method embodiments.

For example, when a computer program is executed by a computer, the computer is enabled to implement the method performed by the producer entity in the foregoing method embodiments.

For another example, when a computer program is executed by a computer, the computer is enabled to implement the method performed by the consumer entity in the foregoing method embodiments.

An embodiment of this application further provides a computer program product. The computer program product includes instructions. When the instructions are executed by a computer, the method performed by the producer entity or the consumer entity in the foregoing method embodiments is implemented.

An embodiment of this application further provides a communication system. The communication system includes the producer entity and the consumer entity in the foregoing embodiments.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in another manner. For example, the apparatus embodiments described above are merely examples. For example, division into the units is merely logical function division, and another division manner may be used during actual implementation. For example, at least two units or components may be combined or integrated into another system, or some features may be omitted or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

All or some of the foregoing embodiments may be implemented by software, hardware, firmware, or any combination thereof. When software is used to implement the foregoing embodiments, all or some of the foregoing embodiments may be implemented in a form of a computer program product. The computer program product includes at least one computer instruction. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating at least one usable medium. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the foregoing usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A network management intent management method, wherein the method comprises:
sending, to N network management service producer entities in a one-to-one manner, N network management sub-intents obtained by decomposing a network management intent;
receiving N execution results corresponding to the N network management sub-intents, wherein the N execution results are correspondingly from the N network management entities, and obtaining an execution result of the network management intent based on the N execution results, wherein the N execution results comprise an execution result indicating unfulfillment; and
sending, based on the execution result of the network management intent, management indication information to a network management service producer entity that fails to fulfill a target, wherein the network management service producer entity that fails to fulfill the target is a network management service producer entity in the N network management service producer entities that fails to fulfill a target of a corresponding network management sub-intent, and the management indication information indicates whether the network management service producer entity that fails to fulfill the target is to replace a network management action group for fulfilling the target of the corresponding network management sub-intent.

2. The method according to claim 1, wherein the N execution results respectively comprise performance indicator values of managed entities of the corresponding network management sub-intents, and obtaining the execution result of the network management intent based on the N execution results comprises:
determining, based on the performance indicator values of the managed entities of the N network management sub-intents, whether the execution result of the network management intent is fulfillment or unfulfillment.

3. The method according to claim 1 or 2, wherein an execution result that is of the network management sub-intent and that is from the network management producer entity that fails to fulfill the target further comprises action group exhaustion indication information, and the action group exhaustion indication information indicates whether the network management producer entity that fails to fulfill the target has a network management action group that can be used for replacement.

4. The method according to any one of claims 1 to 3, wherein before obtaining the execution result of the network management intent based on the N execution results, the method further comprises:
respectively sending action group freezing indication information to the N network management service producer entities, wherein the action group freezing indication information indicates the N network management service producer entities not to replace network management action groups based on the execution results of the corresponding network management sub-intents.

5. The method according to any one of claims 1 to 4, wherein the method further comprises:
adjusting, based on the N execution results, the target of the network management sub-intent corresponding to the network management service producer entity that fails to fulfill the target, wherein the management indication information further indicates an adjusted target of the network management sub-intent corresponding to the network management service producer entity that fails to fulfill the target.

6. The method according to any one of claims 1 to 5, wherein before obtaining the execution result of the network management intent based on the N execution results, the method further comprises:
sending, to the N network management service producer entities respectively, trigger conditions for returning the execution results of the network management sub-intents, wherein the trigger condition is that a target of a corresponding network management sub-intent fails to be fulfilled within detection duration.

7. The method according to claim 6, wherein receiving the execution results of the corresponding network management sub-intents respectively from the N network management service producer entities comprises:
receiving the execution result of the corresponding network management sub-intent from the network management service producer entity that fails to fulfill the target;
sending fulfillment status query information to another network management service producer entity other than the network management service producer entity that fails to fulfill the target in the N network management service producer entities, wherein the fulfillment status query information is for requesting to return an execution result of a corresponding network management sub-intent; and
receiving the execution result of the corresponding network management sub-intent from the another network management service producer entity.

8. The method according to any one of claims 1 to 7, wherein the method further comprises:
when the execution result of the network management intent is fulfillment, determining that the network management service producer entity that fails to fulfill the target is not to replace the network management action group, wherein the management indication information indicates the network management service producer entity that fails to fulfill the target not to replace the network management action group; or
when the execution result of the network management intent is unfulfillment, determining that the network management service producer entity that fails to fulfill the target is to replace the network management action group, wherein the management indication information indicates the network management service producer entity that fails to fulfill the target to replace the network management action group; or when the execution result of the network management intent is unfulfillment and the network management producer entity that fails to fulfill the target has a network management action group that can be used for replacement, determining that the network management service producer entity that fails to fulfill the target is to replace the network management action group, wherein the management indication information indicates the network management service producer entity that fails to fulfill the target to replace the network management action group.

9. The method according to any one of claims 1 to 8, wherein the N network management service producer entities are respectively N different equipment management systems, or the N network management producer entities are respectively N different network elements.

10. The method according to any one of claims 1 to 9, wherein the network management intent is an end-to-end intent, and the N network management sub-intents are N different management domain intents obtained by decomposing the end-to-end intent.

11. A network management intent management method, wherein the method comprises:
receiving a network management sub-intent obtained by decomposing a network management intent;
sending an execution result of the network management sub-intent, wherein the execution result of the network management sub-intent indicates that a target of the network management sub-intent fails to be fulfilled; and
receiving management indication information, wherein the management indication information indicates whether to replace a network management action group for fulfilling the target of the network management sub-intent, and the management indication information is determined based on an execution result of the network management intent.

12. The method according to claim 11, wherein the execution result of the network management sub-intent comprises a current performance value of a managed entity of the network management sub-intent, and the performance indicator value is for determining that the execution result of the network management intent is fulfillment or unfulfillment.

13. The method according to claim 11 or 12, wherein the execution result of the network management sub-intent further comprises action group exhaustion indication information, and the action group exhaustion indication information indicates whether there is a network management action group that can be used for replacement.

14. The method according to any one of claims 11 to 13, wherein before sending the execution result of the network management sub-intent, the method further comprises:
receiving action group freezing indication information, wherein the action group freezing indication information indicates not to replace the network management action group based on the execution result of the network management sub-intent.

15. The method according to any one of claims 11 to 14, wherein the management indication information further indicates an adjusted target of the network management sub-intent.

16. The method according to any one of claims 11 to 15, wherein before sending the execution result of the network management sub-intent, the method further comprises:
receiving a trigger condition for returning the execution result of the network management sub-intent, wherein the trigger condition is that the target of the network management sub-intent fails to be fulfilled within detection duration; and
sending the execution result of the network management sub-intent comprises:
sending the execution result of the network management sub-intent in response to that the trigger condition is satisfied.

17. The method according to any one of claims 11 to 16, wherein the method further comprises:
determining, based on the management indication information, whether to replace the network management action group for fulfilling the target of the network management sub-intent.

18. The method according to any one of claims 11 to 17, wherein the network management intent is an end-to-end intent, and the network management sub-intent is a management domain intent obtained by decomposing the end-to-end intent.

19. A network management intent management method, wherein the method comprises:
sending, to N network management service producer entities in a one-to-one manner, N network management sub-intents obtained by decomposing a network management intent, and respectively receiving, by the N network management service producer entities, the corresponding network management sub-intents;
respectively sending, by the N network management service producer entities, execution results of the corresponding network management sub-intents, receiving N execution results corresponding to the N network management sub-intents, wherein the N execution results are correspondingly from the N network management entities, and obtaining an execution result of the network management intent based on the N execution results, wherein the N execution results comprise an execution result indicating unfulfillment; and
sending, based on the execution result of the network management intent, management indication information to a network management service producer entity that fails to fulfill a target, and receiving, by the network management service producer entity that fails to fulfill the target, the management indication information, wherein the network management service producer entity that fails to fulfill the target is a network management service producer entity in the N network management service producer entities that fails to fulfill a target of a network management sub-intent, and the management indication information indicates whether the network management service producer entity that fails to fulfill the target is to replace a network management action group for fulfilling the target of the corresponding network management sub-intent.

20. A network management intent management apparatus, wherein the apparatus comprises a transceiver unit and a processing unit, wherein
the transceiver unit is configured to send, to N network management service producer entities in a one-to-one manner, N network management sub-intents obtained by decomposing a network management intent;
the transceiver unit is configured to: receive N execution results corresponding to the N network management sub-intents, wherein the N execution results are correspondingly from the N network management entities, and obtain an execution result of the network management intent based on the N execution results, wherein the N execution results comprise an execution result indicating unfulfillment; and
the processing unit is configured to send, based on the execution result of the network management intent, management indication information to a network management service producer entity that fails to fulfill a target, wherein the network management service producer entity that fails to fulfill the target is a network management service producer entity in the N network management service producer entities that fails to fulfill a target of a network management sub-intent, and the management indication information indicates whether the network management service producer entity that fails to fulfill the target is to replace a network management action group for fulfilling the target of the corresponding network management sub-intent.

21. A network management intent management apparatus, wherein the apparatus comprises a transceiver unit and a processing unit, wherein
the transceiver unit is configured to receive a network management sub-intent obtained by decomposing a network management intent;
the transceiver unit is configured to send an execution result of the network management sub-intent, wherein the execution result of the network management sub-intent indicates that a target of the network management sub-intent fails to be fulfilled; and
the transceiver unit is configured to receive management indication information, wherein the management indication information indicates whether to replace a network management action group for fulfilling the target of the network management sub-intent, and the management indication information is determined based on an execution result of the network management intent.

22. A communication system, comprising an apparatus configured to perform the method according to any one of claims 1 to 10 and an apparatus configured to perform the method according to any one of claims 11 to 18.

23. The system according to claim 22, further comprising a managed entity of a network management intent.

24. A computer-readable storage medium, wherein the computer-readable storage medium stores a computer program, and when the computer program is run on a computer, the computer is enabled to perform the method according to any one of claims 1 to 10, or the computer is enabled to perform the method according to any one of claims 11 to 18.

25. A computer program product, comprising computer program code, wherein when the computer program code is run on a computer, the computer is enabled to implement the method according to any one of claims 1 to 10, or the computer is enabled to implement the method according to any one of claims 11 to 18.

26. A communication apparatus, comprising a processor, wherein the processor is configured to execute a computer program stored in a memory, to enable the apparatus to perform the method according to any one of claims 1 to 10, or the processor is configured to execute a computer program stored in a memory, to enable the apparatus to perform the method according to any one of claims 11 to 18.

27. The apparatus according to claim 26, wherein the apparatus further comprises the memory.
